# EUROPEAN PATENT APPLICATION

(11) **EP 3 496 233 A1**
(43) Date of publication of application: **12.06.2019**
(21) Application number: 17205944.6
(22) Date of filing: 07.12.2017
(51) Int. Cl.: H02K 1/14, H02K 21/22, H02K 7/18, F03D 80/80

(54) **ELECTRIC GENERATOR HAVING END-WINDINGS WITH REDUCED AXIAL PROTRUSION**

(71) Applicant: Siemens Gamesa Renewable Energy A/S, 7330 Brande (DK)
(72) Inventor: Azar, Ziad, Sheffield, S10 4ED (GB); Thougaard, Hans-Joergen, 8600 Silkeborg (DK)
(74) Representative: Aspacher, Karl-Georg

(57) **Abstract**

It is described an electric generator (10) comprising a stator (11) having a stator body (13) extending axially between a first axial end portion (21) and a second axial end portion (22), the frame body (13) including a plurality of teeth (15) circumferentially distributed around a longitudinal axis (Y) of the stator (11) and extending axially from one to the other of the first axial end portion (21) and the second axial end portion (22).

The stator body (13)
further comprises an axial middle portion (23).

The circumferential width (S1, S2) of each of the plurality of teeth (15) varies along the longitudinal axis (Y), the circumferential width (S1) at the axial middle portion (23) of the stator body (13) being greater than the circumferential width (S2) at the first axial end portion (21) and/or at the second axial end portion (21).

## Description

### Field of invention

The present invention relates to an electric generator having stator geometry permitting end windings with reduced axial protrusion.
The present invention may be particularly, but not exclusively, applied to the electric generator of a wind turbine.

### Art Background

An electric generator or motor, such as an electric generator installed in a wind turbine, typically comprises a rotor which rotates relative to a stator.

The stator typically includes a body having stator slots extending along an axial direction of the stator and an electric circuit comprising a plurality of copper coils housed in the slots and end-windings axially protruding from the axial ends of the stator body. Each end-winding is normally shaped as a curve of copper wire in air connecting the wires in two respective stator slots.

Copper in air is characterized by a poor magnetic circuit. As a result the above described end-windings do not directly contribute to the electric generator performances, i.e. they do not generate torque or power, but generate instead copper loss, thus causing efficiency reduction.

It is therefore desirable for the end-windings to be as short as possible.

### Summary of the invention

Scope of the present invention is to provide an electric generator having a stator geometry permitting to avoid the above described inconveniences, by optimally reducing the axial protrusion of the end-windings with respect to the stator body, thus limiting or preferably avoiding the length of copper wire in air.

This scope is met by the subject matter according to the independent claims. Advantageous embodiments of the present invention are described by the dependent claims.

According to a first aspect of the invention, it is provided an electric generator comprising a stator having a stator body extending axially between a first axial end portion and a second axial end portion, the frame body including a plurality of teeth circumferentially distributed around a longitudinal axis of the stator and extending axially from one to the other of the first axial end portion and the second axial end portion,
the stator body comprising at least an axial middle portion interposed between the first axial end portion and the second axial end portion,
wherein a circumferential width of each of the plurality of teeth varies along the longitudinal axis, the circumferential width at the axial middle portion of the stator body being greater than the circumferential width at the first axial end portion and/or at the second axial end portion.

The above described electric generator or motor may be advantageously integrated in a wind turbine.

According to a second aspect of the invention, it is provided a method of manufacturing an electric generator comprising the steps of:
- forming a stator body extending axially between a first axial end portion and a second axial end portion, the stator body including a plurality of teeth circumferentially distributed around a longitudinal axis of the stator and extending axially from one to the other of the first axial end portion and the second axial end portion, an axial middle portion being interposed between the first axial end portion and the second axial end portion, a plurality of slots being interposed between the teeth, a circumferential width of each of the plurality of teeth varying along the longitudinal axis in such a way that the circumferential width at the axial middle portion of the stator body is greater than the circumferential width at the first axial end portion and/or at the second axial end portion,
- forming an electric circuit having a plurality of coil windings inside the slots and a plurality of end-windings connecting the coil windings at the first axial end portion and/or at the second axial end portion.

Advantageously, the stator geometry achieved through the present invention allows reducing or eliminating the length of copper wire in air.

According to an embodiment of the invention, the circumferential width of each of the plurality of teeth varies along the longitudinal axis gradually between a first value and a second value of the circumferential width. Particularly, the first axial end portion and/or at the second axial end portion may have a U-shaped profile in a circumferential view of the stator.

Advantageously, the present invention permits, with respect to the prior art, improving the performances of the magnetic circuit of the electric generator. With respect to the prior art, as a result, the following geometric improvements are possible:
- leaving the axial length of the rotor unvaried, the stator can be axially shorter. This means using less copper, resulting in lower generator cost and higher efficiency, i.e. a higher AEP: "Annual Energy Production");
- the rotor can be made axially longer, so that larger torque and power can be obtained for the same efficiency and within the same axial length, again an higher AEP is achieved;
- combining the two above solution is also possible, i.e. the rotor can be made axially longer and the stator can be made axially shorter in order to maximize the above described benefits.

Further advantages are:
- lower costs due to shorter coils, lighter stator and consequently lighter supporting structures;
- lower copper losses, so higher efficiency. This is beneficial in larger rated output power, higher de-rating temperature, higher efficiency and higher AEP;
- larger torque for the same efficiency, so larger power per generator volume, and consequently lower CoE: "Cost of generating Electricity";
- more effective cooling for end-windings due to better thermal contact with the laminations, i.e. smaller thermal resistance;
- better mechanical support for end-windings, whose length in air is reduced or eliminated.

According to a further embodiment of the invention, the stator body comprises a stack of laminations, each lamination having plurality of respective lamination teeth circumferentially distributed around a longitudinal axis of the stator and extending axially from one to the other of the first axial end portion and the second axial end portion, a circumferential width of the lamination teeth varying along the longitudinal axis, the circumferential width at the axial middle portion of the stator body being greater than the circumferential width at the first axial end portion) and/or at the second axial end portion.

Advantageously, the present invention may be applied to stator having lamination structures.

Further advantageously, the invention is applicable and beneficial for a great variety of electric generator topologies, i.e. fractional-slot and integral-slot, and different number of phases and winding topologies, i.e. concentrated, distributed, single and double layers, over lapping and nonoverlapping winding topologies.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including an electric generator with stator geometry according to the present invention
- Figure 2: shows a partial cross section of a first embodiment of an electric generator in accordance with the present invention.
- Figure 3: shows a partial cross section of a second embodiment of an electric generator in accordance with the present invention.
- Figure 4: shows a circumferential section of the electric generator of Figure 2, according to the sectional line IV-IV of figure 2.
- Figure 5: shows a circumferential section of the electric generator of Figure 3, according to the circumferential sectional line V-V of figure 3.
- Figure 6: shows a circumferential section of an electric generator of the prior art.
- Figure 7: shows a circumferential section of another electric generator of the prior art.

### Detailed Description

The illustrations in the drawings are schematic. It is noted that in different figures, similar or identical elements are provided with the same reference signs.

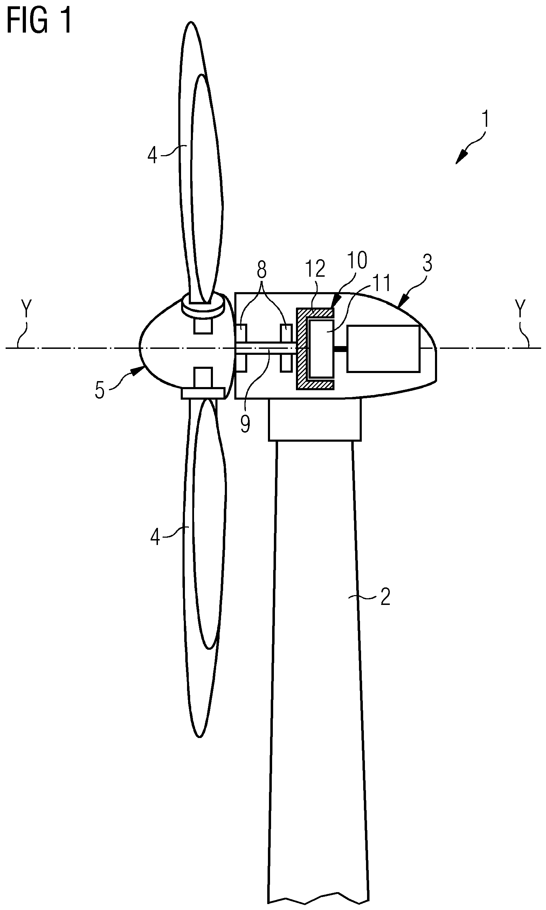

**Figure 1** shows a wind turbine 1 according to the invention. The wind turbine 1 comprises a tower 2, which is mounted on a non-depicted fundament. A nacelle 3 is arranged on top of the tower 2.

The wind turbine 1 further comprises a wind rotor 5 having two, three or more blades 4 (in the perspective of Figure 1 only two blades 4 are visible). The wind rotor 5 is rotatable around a rotational axis Y. When not differently specified, the terms axial, radial and circumferential in the following are made with reference to the rotational axis Y.

The blades 4 extend radially with respect to the rotational axis Y.

The wind turbine 1 comprises a permanent magnet electric generator 10.

According to other possible embodiments of the present invention (not represented in the attached figures), the present invention may be applied to other types of electric machines design, e.g. induction, synchronous, etc.

The wind rotor 5 is rotationally coupled with the permanent magnet generator 10 by means of a rotatable main shaft 9.

According to other possible embodiments of the present invention (not represented in the attached figures), the wind rotor 5 is rotationally coupled directly with the permanent magnet generator 10 (direct-drive generator configuration).

A schematically depicted bearing assembly 8 is provided in order to hold in place the rotor 5. The rotatable main shaft 9 extends along the rotational axis Y. The permanent magnet electric generator 10 includes a stator 11 and a rotor 12. The rotor 12 is rotatable with respect to the stator 11 about the rotational axis Y.

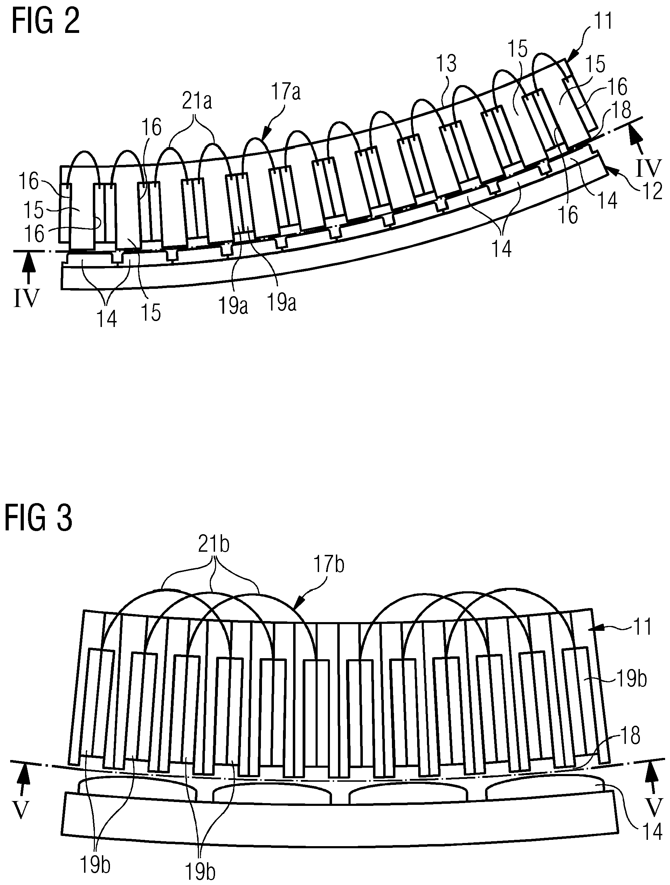

**Figure 2** shows a detailed view of a cross section of the stator 11 and the rotor 12 of a first embodiment of the electric generator 10.

The stator 11 includes a stator body 13 having a plurality of radial stator teeth 15 and a plurality of intermediate slots 16, each slot 16 circumferentially extending between two respective teeth 15.

The rotor 12 is radially external with respect the stator 11 and rotatable about the rotational axis Y and comprises a plurality of permanent magnets 14 attached to a side of the rotor 12 which faces the stator 11.

According to other possible embodiments of the present invention (not represented in the attached figures), the rotor 12 is radially internal with respect the stator 11 and rotatable about the rotational axis Y.

A circumferential air gap 18 is provided between the stator 11 and the rotor 12.

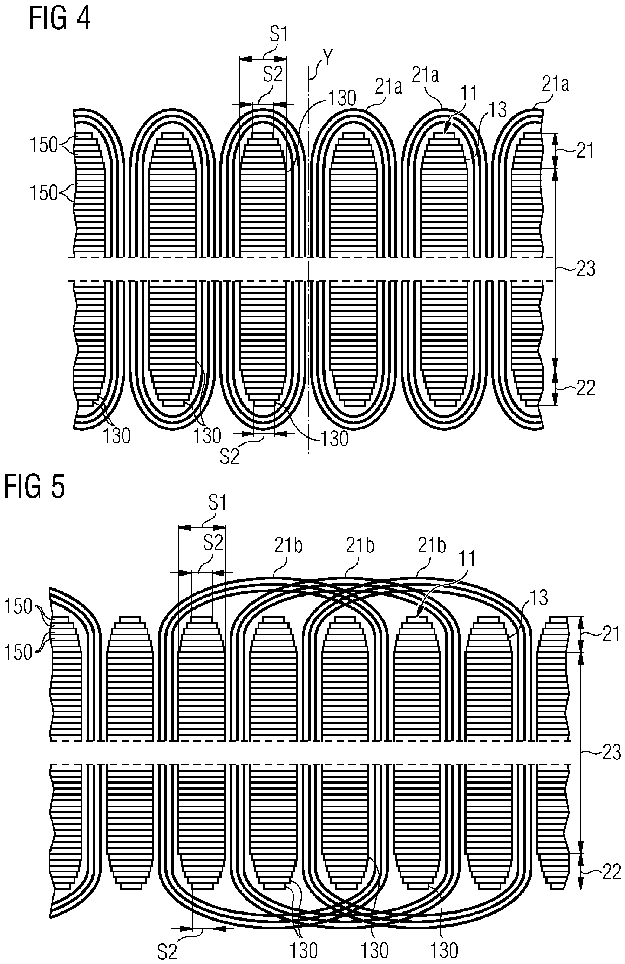

The stator 11 further includes an electric circuit 17a having a plurality of coil concentrated windings 19a inside the slots 16 of the stator body 13 and a plurality of end-windings 21a connecting the concentrated windings 19a. Two coil concentrated windings 19a are housed inside each of the slots 16. Each end-winding 21a connects the axial ends of two concentrated windings 19a in two respective circumferentially adjacent slots 16, as further detailed in the following with reference to the circumferential view of Figure 4.

**Figure 3** shows a detailed view of a cross section of the stator 11 and the rotor 12 of a second embodiment of the electric generator 10.

The embodiment in Figure 3 differentiates itself from the embodiment in Figure 2, for comprising a different electric circuit 17b.

The electric circuit 17b comprises plurality of coil distributed windings 19b inside the slots 16 of the stator body 13 and a plurality of end-windings 21b connecting the distributed windings 19b. One coil distributed winding 19b is housed inside each of the slots 16. Each end-winding 21b connects the axial ends of two distributed windings 19b in two respective circumferentially distanced slots 16. In a 3-phase system, as further detailed in the following with reference to the circumferential view of Figure 5, each end-winding 21b of one phase connects the axial ends of two distributed windings 19b in two respective circumferentially slots 16, circumferentially separated from each other by three stator teeth and by two slots respectively housing two distributed windings 19b of the other two phases.

**Figure 4** shows a circumferential view, according to the sectional line IV-IV of figure 2, of the stator 11 and of the electric circuit 17a of the first embodiment of the electric magnet generator 10. In other words, figure 4 shows the stator 11 and of the electric circuit 17a viewed according to a radial direction oriented from the rotor 12 towards the the rotational axis Y.

The stator body 13 extends axially between a first axial end portion 21 and a second axial end portion 22. An axial middle portion 23 is interposed between the first axial end portion 21 and the second axial end portion 22. Each of the teeth 15 extends axially from one to the other of the first axial end portion 21 and the second axial end portion 22 and has a circumferential width S1, S2, which varies along the longitudinal axis Y. In general, according to the present invention, the circumferential width S1 at the axial middle portion 23 of the stator body 13 is greater than the circumferential width S2 at one of both of the first axial end portion 21 and the second axial end portion 22, in order that such shape of the stator 11 guides and support the end-windings 21a connecting the concentrated end-windings 19a, thus avoiding or at least limiting the length of copper in air.

According to the embodiments of the attached figures, the circumferential width S1, S2 of each of the plurality of teeth 15 varies along the longitudinal axis Y gradually between a respective first value S1 at the axial middle portion 23 and a second value S2 of the circumferential width at the first axial end portion 21 and/or at the second axial end portion 22.

The first axial end portion 21 and the second axial end portion 22 have a U-shaped profile in the circumferential view of Figure 4.

The stator body 13 is manufactured as a stack of laminations 130, each lamination 130 having plurality of respective lamination teeth 150 circumferentially distributed around a longitudinal axis Y of the stator 11 and extending axially from one to the other of the first axial end portion 21 and the second axial end portion 22. A circumferential width S1, S2 of the lamination teeth 150 varies along the longitudinal axis Y. The circumferential width S1 of the lamination teeth 150 at the axial middle portion 23 is greater than the circumferential width S2 at one of both of the first axial end portion 21 and the second axial end portion 22. The stacking of the laminations 130 permits to obtain the stator body 13 according to the present invention.

**Figure 5** shows a circumferential view, according to the sectional line V-V of figure 3, of the stator 11 and of the electric circuit 17b of the second embodiment of the electric magnet generator 10. In both embodiments the structure of the stator body 13 is identical. Also in this embodiment the shape of the stator 11 guides and support the end-windings 21b connecting the distributed end-windings 19b, thus avoiding or at least limiting the length of copper in air.

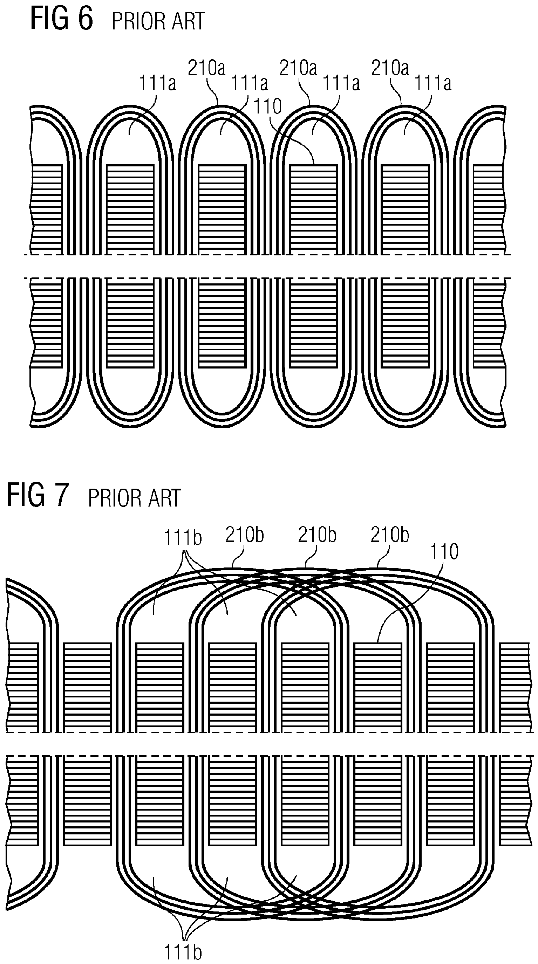

**Figures 6** and **7** shows two circumferential views, respectively equivalent to those of Figures 4 and 5, of a stator 110 of a permanent magnet electric generator according to the prior art. In the stator 110 the circumferential width of the teeth is constant. Due to the minimum bending radius of the wire free areas 111a, 111b are respectively comprised between the axial ends of the stator body and the end-windings 210a, 210b of the stator 110. The end-windings 210a, 210b are completely in air, thus causing a magnetic circuit with reduced characteristics, which the present invention permits avoiding or limiting.

## Claims

1. Electric generator (10) comprising a stator (11) having a stator body (13) extending axially between a first axial end portion (21) and a second axial end portion (22), the frame body (13) including a plurality of teeth (15) circumferentially distributed around a longitudinal axis (Y) of the stator (11) and extending axially from one to the other of the first axial end portion (21) and the second axial end portion (22),
the stator body (13) comprising at least an axial middle portion (23) interposed between the first axial end portion (21) and the second axial end portion (22),
wherein a circumferential width (S1, S2) of each of the plurality of teeth (15) varies along the longitudinal axis (Y), the circumferential width (S1) at the axial middle portion (23) of the stator body (13) being greater than the circumferential width (S2) at the first axial end portion (21) and/or at the second axial end portion (22).

2. Electric generator (10) as claimed in claim 1, wherein the circumferential width (S1, S2) of each of the plurality of teeth (15) varies along the longitudinal axis (Y) gradually between a first value (S1) and a second value (S2) of the circumferential width.

3. Electric generator (10) as claimed in claim 2, wherein the first axial end portion (21) and/or at the second axial end portion (22) have a U-shaped profile in a circumferential view of the stator (11).

4. Electric generator (10) as claimed in any of the previous claims, wherein the stator body (13) comprises a stack of laminations (130), each lamination having plurality of respective lamination teeth (150) circumferentially distributed around a longitudinal axis (Y) of the stator (11) and extending axially from one to the other of the first axial end portion (21) and the second axial end portion (22), a circumferential width (S1, S2) of the lamination teeth (150) varying along the longitudinal axis (Y), the circumferential width (S1) at the axial middle portion (23) of the stator body (13) being greater than the circumferential width (S2) at the first axial end portion (21) and/or at the second axial end portion (22).

5. Electric generator (10) as claimed in any of the previous claims, wherein a plurality of concentrated coil windings (19a) is housed in a plurality of slots (16) interposed between the teeth (15) of the stator 11.

6. Electric generator (10) as claimed in any of the previous claims, wherein a plurality of distributed coil windings (19b) is housed in a plurality of slots (16) interposed between the teeth (15) of the stator (11).

7. A wind turbine (1) including an electric generator (10) according to any of the previous claims.

8. Method of manufacturing a stator (11) for an electric generator (10) comprising the steps of:
- forming a stator body (13) extending axially between a first axial end portion (21) and a second axial end portion (22), the stator body (13) including a plurality of teeth (15) circumferentially distributed around a longitudinal axis (Y) of the stator (11) and extending axially from one to the other of the first axial end portion (21) and the second axial end portion (22), an axial middle portion (23) being interposed between the first axial end portion (21) and the second axial end portion (22), a plurality of slots (16) being interposed between the teeth (15), a circumferential width (S1, S2) of each of the plurality of teeth (15) varying along the longitudinal axis (Y) in such a way that the circumferential width (S1) at the axial middle portion (23) of the stator body (13) is greater than the circumferential width (S2) at the first axial end portion (21) and/or at the second axial end portion (22),
- forming an electric circuit (17a, 17b) having a plurality of coil windings (19a, 19b) inside the slots (16) and a plurality of end-windings (21a, 21b) connecting the coil windings (19a, 19b) at the first axial end portion (21) and/or at the second axial end portion (22).

9. Method as claimed in claim 8, wherein the electric circuit (17a) comprises a plurality of concentrated coil windings (19a).

10. Method as claimed in claim 8, wherein the electric circuit (17b) comprises a plurality of distributed coil windings (19b).
